# EUROPEAN PATENT SPECIFICATION

(11) **EP 3 219 762 B1**
(45) Date of publication and mention of the grant of the patent: **23.01.2019**
(21) Application number: 15858533.1
(22) Date of filing: 16.09.2015
(51) Int. Cl.: C08L 83/07, C08K 3/36, C08K 5/3472, C08K 5/521, C08L 83/05

(54) **ADDITION-CURABLE SILICONE RUBBER COMPOSITION**
ADDITIONSHÄRTBARE SILIKONKAUTSCHUKZUSAMMENSETZUNG
COMPOSITION DE CAOUTCHOUC DE SILICONE DURCISSABLE PAR ADDITION

(30) Priority: 13.11.2014 JP 2014230726
(43) Date of publication of application: 20.09.2017
(73) Proprietor: Shin-Etsu Chemical Co., Ltd., Tokyo 100-0004 (JP)
(72) Inventor: KATO Nobu, Annaka-shi Gunma 379-0224 (JP); IINO Mikio, Annaka-shi Gunma 379-0224 (JP)
(74) Representative: Mewburn Ellis LLP
(86) International application number: PCT/JP2015/076217
(87) International publication number: WO 2016/076010

(56) References cited:
- CN-A- 102 807 757
- JP-A- H0 995 614
- JP-A- H10 219 114
- JP-A- H11 140 322
- JP-A- 2006 056 986
- JP-A- 2012 092 305
- JP-A- 2015 022 800
- US-A- 5 973 030

## Description

### TECHNICAL FIELD

This invention relates to an addition-curable silicone rubber composition which can provide cured silicone products that exhibit excellent flame retardancy without compromising the mechanical characteristics (rubber properties) of the silicone rubber.

### BACKGROUND ART

Silicone rubber, owing to its heat resistance, cold resistance, safety, good appearance (transparency), agreeable texture as well as good durability, is used in a wide range of fields, including health care materials such as for baby bottle nipples and food products, hose and gasket materials for vehicles, building components and textile coating materials.

In silicone rubber, the backbone consists of siloxane linkages. Compared with ordinary organic rubber, silicone rubber has a low proportion of organic ingredients (hydrocarbon ingredients) and resists burning. However, under harsh conditions such as direct contact with a flame, silicone rubber will ignite and burn.

In order to resolve this problem, methods that involve the addition to silicone rubber compositions of, as flame retardants: aluminum hydroxide or carbon black (Patent Document 1: JP-A 2004-161944), or zinc carbonate powder (Patent Document 2: JP-A H09-316336) have been proposed. However, when these conventional flame retardantsthat is, fillers such as aluminum hydroxide, carbon black or zinc carbonate powder--are added to a silicone rubber composition, the silicone rubber serving as the base undergoes a change in appearance and a rise in viscosity, and the physical characteristics (rubber properties) of cured products obtained therefrom, such as mechanical strength and elongation, ultimately change.

### PRIOR ART DOCUMENTS

### PATENT DOCUMENTS

Patent Document 1: JP-A 2004-161944
Patent Document 2: JP-A H09-316336

### SUMMARY OF THE INVENTION

### PROBLEMS TO BE SOLVED BY THE INVENTION

This invention was arrived at in order to improve the above circumstances. An object of the invention is to provide an addition-curable silicone rubber composition in which a flame retardant has been added to increase the flame retardancy and yet the physical properties of the silicone rubber serving as the base are unchanged.

### MEANS FOR SOLVING THE PROBLEMS

The inventors have conducted extensive investigations in order to achieve the above object. As a result, they have discovered that, by combining together and adding specific respective amounts of a triazole compound and a phosphate ester compound to an addition-curable silicone rubber composition that includes a silicon-bonded alkenyl group-containing organopolysiloxane, an organohydrogenpolysiloxane, a fine reinforcing silica powder and a platinum catalyst, there can be obtained an addition-curable silicone rubber composition in which, unlike with conventional flame retardants, the physical properties of the silicone rubber serving as the base are not compromised and which, moreover, is able to give cured silicone rubber products endowed with a high flame retardancy.

Accordingly, the invention provides the addition-curable silicone rubber composition shown below.
[1] An addition-curable silicone rubber composition comprising:
   (A) 100 parts by weight of an alkenyl group-containing organopolysiloxane having at least two silicon-bonded alkenyl groups per molecule;
   (B) from 0.2 to 20 parts by weight, per 100 parts by weight of component (A), of an organohydrogenpolysiloxane containing at least two silicon-bonded hydrogen atoms per molecule;
   (C) from 5 to 80 parts by weight, per 100 parts by weight of components (A) and (B) combined, of a fine reinforcing silica powder having a specific surface area as measured by the BET method of at least 50 m²/g;
   (D) from 0.001 to 1 part by weight of a triazole compound;
   (E) from 0.001 to 5 parts by weight of a phosphate ester compound; and
   (F) a catalytic amount of a platinum catalyst.
[2] The addition-curable silicone rubber composition of [1], wherein component (D) is benzotriazole.
[3] The addition-curable silicone rubber composition of [1] or [2], wherein component (E) is a triaryl phosphate.
[4] The addition-curable silicone rubber composition of any one of [1] to [3] which gives a cured silicone rubber product having a flame retardancy of V-2 or better according to the UL 94 standard.

### ADVANTAGEOUS EFFECTS OF THE INVENTION

This invention, through a combination of specific amounts of above components (A) to (F), makes it possible to provide an addition-curable silicone rubber composition which is able to give cured silicone rubber products having high flame retardancy without compromising the physical properties of the silicone rubber serving as the base.

### EMBODIMENT FOR CARRYING OUT THE INVENTION

The invention is described more fully below.

First, the organopolysiloxane containing at least two silicon-bonded alkenyl groups per molecule which is included as component (A) serves as the base polymer of this composition. This organopolysiloxane may be one having the following average compositional formula (I).

R¹ₐSiO_{(4-a/2)} (I)

In this formula, each R¹ is a like or unlike substituted or unsubstituted monovalent hydrocarbon group having 1 to 10, preferably 1 to 8, carbon atoms; and the subscript 'a' is a positive number in the range of 1.5 to 2.8, preferably 1.8 to 2.5, and more preferably 1.95 to 2.05.

Here, illustrative examples of the substituted or unsubstituted monovalent hydrocarbon group having 1 to 10, preferably 1 to 8, carbon atoms that is bonded to a silicon atom and is represented above as R¹ include alkyl groups such as methyl, ethyl, propyl, isopropyl, butyl, isobutyl, tert-butyl, pentyl, neopentyl, hexyl, cyclohexyl, octyl, nonyl and decyl groups; aryl groups such as phenyl, tolyl, xylyl and naphthyl groups; aralkyl groups such as benzyl, phenylethyl and phenylpropyl groups; alkenyl groups such as vinyl, allyl, propenyl, isopropenyl, butenyl, hexenyl, cyclohexenyl and octenyl groups; and any of these groups in which some or all of the hydrogen atoms are substituted with fluorine, bromine, chlorine or other halogen atoms, cyano groups or the like, such as chloromethyl, chloropropyl, bromoethyl, trifluoropropyl and cyanoethyl groups. Preferably, at least 90 mol% of all R¹ groups are methyl groups.

It is critical for at least two of the R¹ groups to be alkenyl groups. The alkenyl groups are preferably ones having from 2 to 8 carbon atoms, more preferably ones having from 2 to 6 carbon atoms, and most preferably vinyl groups.

The alkenyl group content in the organopolysiloxane is set to preferably from 1.0×10⁻⁶ mol/g to 3.0×10⁻³ mol/g, and especially from 1.0×10⁻⁵ mol/g to 2.0×10⁻³ mol/g. When the alkenyl group content is below 1.0×10⁻⁶ mol/g, the rubber hardness may be too low, with the cured product becoming gel-like. On the other hand, at an alkenyl group content greater than 3.0×10⁻³ mol/g, the crosslink density may be too high, the hardness may be excessive and the rubber elasticity may be lost. These alkenyl groups may be bonded to silicon atoms at the ends of the molecular chain, may be bonded to non-terminal silicon atoms along the molecular chain, or may be bonded to both.

This organopolysiloxane preferably has a structure which is basically a linear diorganopolysiloxane that is capped at both ends of the molecular chain with triorganosiloxy groups (R¹₃SiO_{1/2}) and the main chain of which consists of recurring diorganosiloxane units (R¹₂SiO_{2/2}), although it may have a branched chain structure or cyclic structure that includes some monoorganosilsesquioxane units (R¹SiO_{3/2}) (wherein R¹ is as defined above).

With regard to the molecular weight or degree of polymerization, the average degree of polymerization (which refers, here and below, to the number-average degree of polymerization) is generally from 100 to 50,000, and preferably from 150 to 20,000. At below 100, the cured product may not achieve a sufficiently rubbery feel; at above 50,000, the viscosity is high and molding may be difficult to carry out. Here and below, the molecular weight or degree of polymerization can be determined as, for example, the polystyrene-equivalent number-average molecular weight or number-average degree of polymerization in gel permeation chromatographic (GPC) analysis using toluene as the developing solvent.

Illustrative examples of such organopolysiloxanes that can be used as component (A) include
diorganopolysiloxanes capped at both ends of the molecular chain with diorganoalkenylsiloxy groups,
diorganopolysiloxanes capped at both ends of the molecular chain with organodialkenylsiloxy groups,
diorganopolysiloxanes capped at both ends of the molecular chain with trialkenylsiloxy groups,
diorganosiloxane-organoalkenylsiloxane copolymers capped at both ends of the molecular chain with triorganosiloxy groups,
diorganosiloxane-organoalkenylsiloxane copolymers capped at both ends of the molecular chain with diorganoalkenylsiloxy groups, and
diorganosiloxane-organoalkenylsiloxane copolymers in which one end of the molecular chain is capped with a diorganoalkenylsiloxy group and
the other end is capped with a triorganosiloxy group.

Diorganopolysiloxanes capped at both ends of the molecular chain with diorganoalkenylsiloxy groups,
diorganosiloxane-organoalkenylsiloxane copolymers capped at both ends of the molecular chain with triorganosiloxy groups, and
diorganosiloxane-organoalkenylsiloxane copolymers capped at both ends of the molecular chain with diorganoalkenylsiloxy groups are preferred.

In these various siloxanes, the "organo" groups refer to groups similar to the substituted or unsubstituted monovalent hydrocarbon groups represented by R¹ in formula (I), exclusive of aliphatic unsaturated groups such as alkenyl groups.

Next, component (B) is an organohydrogenpolysiloxane having at least two, and preferably three or more, silicon-bonded hydrogen atoms (SiH groups) per molecule. It functions as a curing agent (crosslinking agent) for effecting crosslinkage and thereby curing the composition via hydrosilylation addition reactions between the SiH groups on the molecule and silicon-bonded alkenyl groups in component (A).

The organohydrogenpolysiloxane of component (B) is preferably an organohydrogenpolysiloxane having average compositional formula (II) below and containing at least 2, preferably 3 or more, more preferably from 3 to 100, and even more preferably from 4 to 50, silicon-bonded hydrogen atoms (SiH groups) per molecule.

R²_{b}H_{c}SiO_{(4-b-c)/2} (II)

In this formula, each R² is a like or unlike substituted or unsubstituted monovalent hydrocarbon group of 1 to 10, preferably 1 to 8, carbon atoms. The subscript 'b' is a positive number from 0.7 to 2.1, the subscript 'c' is a positive number from 0.001 to 1.0, and the sum b+c is a positive number from 0.8 to 3.0.

Here, the monovalent hydrocarbon group represented by R² is exemplified in the same way as for R¹, although it is preferably one without aliphatic unsaturated groups.

Also, 'b' is a positive number from 0.7 to 2.1, and preferably from 0.8 to 2.0; 'c' is a positive number from 0.001 to 1.0, and preferably from 0.01 to 1.0; and the sum b+c is a positive number from 0.8 to 3.0, and preferably from 10 to 2.5. The molecular structure of the organohydrogenpolysiloxane may be a linear, cyclic, branched, or three-dimensional network structure.

The SiH group content in the organohydrogenpolysiloxane is preferably set to from 0.0005 mol/g to 0.020 mol/g, and especially from 0.001 mol/g to 0.017 mol/g. When the content of SiH groups is lower than 0.0005 mol/g, crosslinking may be inadequate. On the other hand, when the content is greater than 0.020 mol/g, the organohydrogenpolysiloxane may become an unstable substance.

Preferred use can be made of an organohydrogenpolysiloxane which is liquid at room temperature (25°C) and wherein the number of silicon atoms per molecule (or the degree of polymerization) is from about 2 to about 300, preferably from about 3 to about 150, and especially from about 4 to about 100. The silicon-bonded hydrogen atoms may be positioned at either the ends of the molecular chain or at non-terminal positions along the molecular chain, or may be positioned at both.

Exemplary organohydrogenpolysiloxanes for use as component (B) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane,
methylhydrogensiloxane-dimethylsiloxane cyclic copolymers,
methylhydrogenpolysiloxanes capped at both ends with trimethylsiloxy groups, dimethylsiloxane-methylhydrogensiloxane copolymers capped at both ends with trimethylsiloxy groups,
dimethylpolysiloxanes capped at both ends with dimethylhydrogensiloxy groups, dimethylsiloxane-methylhydrogensiloxane copolymers capped at both ends with dimethylhydrogensiloxy groups,
methylhydrogensiloxane-diphenylsiloxane copolymers capped at both ends with trimethylsiloxy groups,
methylhydrogensiloxane-diphenylsiloxane-dimethylsiloxane copolymers capped at both ends with trimethylsiloxy groups,
methylhydrogensiloxane-methylphenylsiloxane-dimethylsiloxane copolymers capped at both ends with trimethylsiloxy groups,
methylhydrogensiloxane-dimethylsiloxane-diphenylsiloxane copolymers capped at both ends with dimethylhydrogensiloxy groups,
methylhydrogensiloxane-dimethylsiloxane-methylphenylsiloxane copolymers capped at both ends with dimethylhydrogensiloxy groups,
copolymers consisting of (CH₃)₂HSiO_{1/2} units, (CH₃)₃SiO_{1/2} units and SiO_{4/2} units, copolymers consisting of (CH₃)₂HSiO_{1/2} units and SiO_{4/2} units,
copolymers consisting of (CH₃)₂HSiO_{1/2} units, SiO_{4/2} units and (C₆H₅)SiO_{3/2} units, and any of these example compounds in which some or all of the methyl groups are replaced with other alkyl or phenyl groups.

The organohydrogenpolysiloxane of component (B) may be, of the compounds mentioned above as examples, a polyvalent aromatic ring-containing organohydrogenpolysiloxane having, on part of the siloxane skeleton (-Si-O-Si-) making up the molecule (typically, at some of the positions of the oxygen atoms that form siloxane linkages), aromatic ring-bearing hydrocarbon skeletons that are generally divalent to tetravalent (such as phenylene skeletons, bisphenylene skeletons, bis(phenylene) ether skeletons, bis(phenylene)methane skeletons, 2,2-bis(phenylene)propane skeletons and 2,2-bis(phenylene)hexafluoropropane skeletons).

The amount of organohydrogenpolysiloxane included as component (B) is from 0.2 to 20 parts by weight, and preferably from 0.3 to 10 parts by weight, per 100 parts by weight of component (A). The molar ratio of silicon-bonded hydrogen atoms (SiH groups) in the organohydrogenpolysiloxane of component (B) to the total amount of silicon-bonded alkenyl groups in components (A) and (B) (particularly in component (A)), which ratio is expressed as (SiH groups)/(alkenyl groups), is preferably from 0.8 to 10, and more preferably from 1.0 to 5. When this ratio is smaller than 0.8, curing (the crosslink density) may be inadequate and the rubber may become sticky; on the other hand, when the ratio is larger than 10, foaming of the molded silicone rubber may be observed, or release from the mold may be difficult.

Next, the fine reinforcing silica powder of component (C) is not particularly limited as to the type of silica, and may be any such powder that is commonly used as a rubber reinforcement. Fine reinforcing silica powders that are employed in conventional silicone rubber compositions may be used here, provided they have a specific surface area, as determined by the BET method, of at least 50 m²/g. The use of precipitated silica (wet silica), fumed silica (dry silica) or pyrogenic silica having a BET specific surface area of from 50 to 400 m²/g, and especially from 100 to 350 m²/g, is preferred, with fumed silica being especially desirable because it enhances the rubber strength. The fine reinforcing silica powder may be a fine silica powder whose surface has been hydrophobically treated with a surface treatment agent exemplified by typically hydrolyzable organosilicon compounds such as chlorosilanes, alkoxysilanes and organosilazanes. In such cases, these fine silica powders may be ones which, in the state of a powder, have been directly subjected to surface hydrophobizing treatment beforehand with a surface treatment agent, or may be ones which have been subjected to surface hydrophobization by the addition of a surface treatment agent during kneading with a silicone oil (such as the alkenyl group-containing organopolysiloxane of component (A)).

In terms of ordinary treatment methods, treatment may be carried out by a commonly known technique, such as placing the untreated fine silica powder and the surface treatment agent in an internal mixer sealed at normal pressure or a fluidized bed, and mixing at room temperature or under heat treatment (heating) in the presence of, where necessary, an inert gas. In some cases, treatment may be accelerated by using a catalyst (e.g., a hydrolysis promoter). Following intensive mixture, the treated silica fine powder can be produced by drying. The amount of treatment agent included should be no less than the amount calculated from the surface area to be covered by the treatment agent.

Illustrative examples of the treatment agent include silazanes such as hexamethyldisilazane; silane coupling agents such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, vinyltris(methoxyethoxy)silane, trimethylchlorosilane, dimethyldichlorosilane, divinyldimethoxysilane and chloropropyltrimethoxysilane; and organosilicon compounds such as polymethylsiloxane and organohydrogenpolysiloxane. Surface treatment with these enables the fine silica powder to be used as a hydrophobic powder. The treatment agent is most preferably a silane-type coupling agent or a silazane.

The content of component (C) per 100 parts by weight of components (A) and (B) combined is from 5 to 80 parts by weight, preferably from 5 to 60 parts by weight, and more preferably from 10 to 60 parts by weight. At less than 5 parts by weight, a sufficient reinforcing effect is not obtained. At more than 80 parts by weight, the viscosity of the silicone rubber composition becomes too high, resulting in a poor workability and processability.

The triazole compound of component (D) is a flame retardant which, when added to the composition in a specific amount together with the subsequently described component (E), is for selectively imparting an excellent flame retardancy without compromising the physical characteristics (rubber properties), such as mechanical strength and elongation at break, of the cured silicone rubber product. The triazole compound of component (D) is exemplified by 1,2,3-triazole, 1,2,4-triazole, benzotriazole, and derivatives thereof. Examples of 1,2,3-triazole derivatives include 1-methyl-1,2,3-triazole, 1-phenyl-1,2,3-triazole, 4-methyl-2-phenyl-1,2,3-triazole, 1-benzyl-1,2,3-triazole, 4-hydroxy-1,2,3-triazole, 1-amino-1,2,3-triazole, 1-benzamido-4-methyl-1,2,3-triazole, 1-amino-4,5-diphenyl-1,2,3-triazole, 1,2,3-triazole-4-aldehyde and 4-cyano-1,2,3-triazole. Examples of 1,2,4-triazole derivatives include 1-methyl-1,2,4-triazole, 1,3-diphenyl-1,2,4-triazole, 5-amino-3-methyl-1,2,4-triazole, 3-mercapto-1,2,4-triazole, 1-phenyl-1,2,4-triazol-5-one and 1-phenylurazole. Examples of benzotriazole derivatives include 1-methylbenzotriazole, 5,6-dimethylbenzotriazole, 2-phenylbenzotriazole, 1-hydroxybenzotriazole and methyl 1-benzotriazolecarboxylate. Of these, the most preferred are benzotriazole, 1,2,3-triazole, 1-methyl-1,2,3-triazole and 1,2,4-triazole. These may be used singly or two or more may be used together.

The content of component (D) per 100 parts by weight of the organopolysiloxane of component (A) is from 0.001 to 1 part by weight, preferably from 0.002 to 0.8 part by weight, more preferably from 0.005 to 0.5 part by weight, and most preferably from 0.01 to 0.2 part by weight. At less than 0.001 part by weight, a sufficient flame retardancy is not obtained; at more than 1 part by weight, the curability decreases.

The phosphate ester compound of component (E) is a flame retardant which, when added to the composition in a specific amount together with above component (D), is for selectively imparting an excellent flame retardancy without compromising the physical characteristics (rubber properties), such as mechanical strength and elongation at break, of the cured silicone rubber product. The phosphate ester compound of component (E) is exemplified by trialkyl phosphate compounds such as trimethyl phosphate and triethyl phosphate, triaryl phosphate compounds such as triphenyl phosphate and tritolyl phosphate, and also aromatic condensed phosphate ester compounds containing at least 2 (e.g., from 2 to 4, and preferably about 2 or 3) aromatic phosphate ester structures per molecule, such as compounds of general formula (III) below.

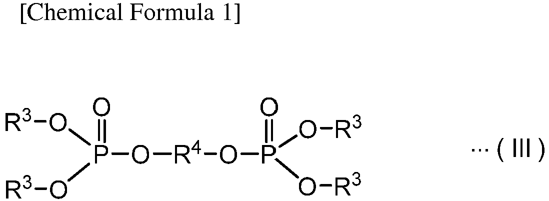

In the formula, R³ is a monovalent aromatic group of 6 to 9 carbon atoms, and R⁴ is a divalent aromatic group of 6 to 15 carbon atoms.

Here, examples of the monovalent aromatic group of 6 to 9 carbon atoms represented by R³ include aryl groups such as phenyl, tolyl and xylyl groups.

Examples of the divalent aromatic group of 6 to 15 carbon atoms represented by R⁴ include arylene groups such as phenylene, tolylene, xylylene, naphthylene and biphenylene groups, and groups of the following formula.

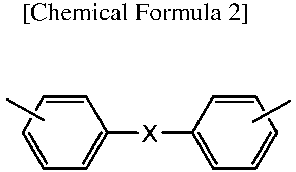

In the formula, X is a divalent hydrocarbon group such as an alkylene group of 1 to 3 carbon atoms, examples of which include methylene, ethylene and propylene groups.

Illustrative examples of aromatic condensed phosphate ester compounds are shown below.

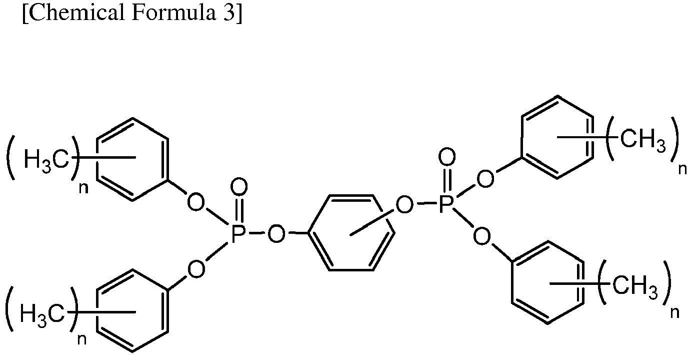

Here, each subscript 'n' independently represents an integer of 0 to 3.

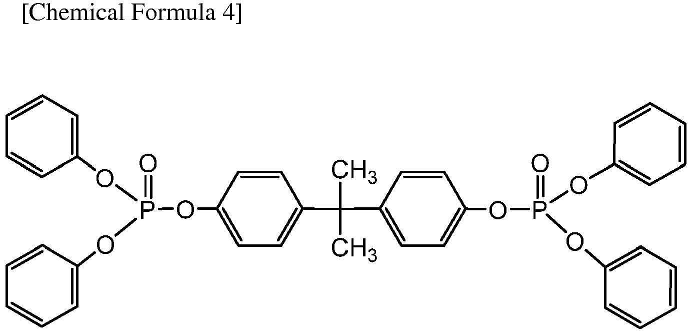

Of these compounds, triethyl phosphate, triphenyl phosphate and tritolyl phosphate are most preferred. These may be used singly or two or more may be used together.

The content of component (E) per 100 parts by weight of the organopolysiloxane of component (A) is from 0.001 to 5 parts by weight, preferably from 0.002 to 4 parts by weight, more preferably from 0.003 to 3 parts by weight, and most preferably from 0.005 to 0.5 part by weight. At less than 0.001 part by weight, a sufficient flame retardancy is not obtained. At more than 5 parts by weight, the rubber properties decrease.

The platinum catalyst of component (F) is exemplified by platinum group metal catalysts such as platinum black, platinic chloride, chloroplatinic acid, reaction products of chloroplatinic acid with monohydric alcohols, complexes of chloroplatinic acid with olefins, and platinum bisacetoacetate.

This platinum catalyst may be included in a catalytic amount. The content, expressed in terms of the weight of the platinum family metal, is generally from about 0.5 to about 1,000 ppm, and especially from about 1 to about 500 ppm, based on the combined weight of components (A) to (E).

Where necessary, the addition-curable silicone rubber composition of the invention may optionally include, as other ingredients, fillers such as precipitated silica, quartz powder, diatomaceous earth and calcium carbonate; conductive materials such as carbon black, conductive zinc white and metal powders; hydrosilylation reaction regulators such as nitrogen-containing compounds, acetylene compounds, phosphorus compounds, nitrile compounds, carboxylates, tin compounds, mercury compounds and sulfur compounds; heat-resistance agents such as iron oxides and cerium oxide; internal mold release agents such as dimethylsilicone oil, tackifiers (especially organosilicon compounds such as alkoxysilanes which contain on the molecule at least one type of functional group selected from among alkenyl, epoxy, amino, (meth)acryloxy and mercapto groups, and which moreover contain no SiH groups on the molecule), and thixotropic agents.

When the addition-curable silicone rubber composition of the invention is a liquid rubber composition (that is, a liquid composition which flows by itself at room temperature), the viscosity at 25°C, as measured with a rotational viscometer, is preferably from 10 to 5,000 Pa·s, and more preferably from 20 to 3,000 Pa·s. At a viscosity lower than 10 Pa·s, the flame retardancy may worsen; on the other hand, at a viscosity higher than 5,000 Pa·s, molding may be difficult. When the inventive composition is a millable rubber composition (i.e., a non-liquid composition which can be kneaded under shear stress and is not self-flowing at room temperature), the plasticity at 25°C (in accordance with JIS K6249) is preferably from 100 to 400, and more preferably from 150 to 350. At a plasticity lower than 100 or higher than 400, molding may be difficult.

Customary methods may be employed for molding and curing this addition-curable silicone rubber composition. The optimal molding method for the intended purpose may be selected from among, for example, injection molding, transfer molding, cast molding and compression molding. The curing conditions that may be used are heat treatment (primary vulcanization) conditions of from about 40°C to about 230°C for a period of from about 3 seconds to about 160 minutes. In addition, where necessary, secondary vulcanization (post-curing) may be carried out at from about 40°C to about 230°C for a period of from about 10 minutes to about 24 hours.

In this invention, the cured product (silicone rubber) obtained by curing the above addition-curable silicone rubber composition has a flame retardancy of V-2 or better according to the UL 94 standard. This flame retardancy can be achieved by uniformly blending components (D) to (F) in the respective above-indicated compounding proportions within an ordinary addition-curable silicone rubber composition composed of components (A) to (C).

The addition-curable silicone rubber composition of the invention can be advantageously used in applications that require flame retardancy, particularly gasket materials for construction, coating materials for fabric made of synthetic fibers, and wire coating materials.

### EXAMPLES

The invention is illustrated more fully below by way of Working Examples and Comparative Examples, although these Examples are not intended to limit the invention. All references to "parts" are by weight. Also, "average degree of polymerization" refers to the polystyrene-equivalent number-average degree of polymerization as determined by gel permeation chromatographic (GPC) analysis using toluene as the developing solvent.

### [Working Example 1]

Sixty parts of dimethylpolysiloxane (A1) capped at both ends of the molecular chain with dimethylvinylsiloxy groups and having an average degree of polymerization of 750, 40 parts of fumed silica (C1) having a BET specific surface area of 300 m²/g (Aerosil 300, from Nippon Aerosil Co., Ltd.), 8 parts of hexamethyldisilazane and 2.0 parts of water were mixed together at room temperature for 30 minutes, after which the temperature was raised to 150°C and stirring was continued for 3 hours, then the mixture was cooled, giving a silicone rubber base.

The following were added to 100 parts of this silicone rubber base: 40 parts of the above dimethylpolysiloxane (A1); 5 parts of dimethylpolysiloxane (A2) which is capped at both ends of the molecular chain with trimethylsiloxy groups, in which 2.5 mol% of pendant (referring, here and below, to monovalent groups or atoms bonded to silicon atoms in the diorganosiloxane units making up the main chain) methyl groups are vinyl groups and which has an average degree of polymerization of 200; as a crosslinking agent, 1.79 parts of a methylhydrogenpolysiloxane (B1) which is capped at both ends of the molecular chain with trimethylsiloxy groups and has pendant SiH groups (a dimethylsiloxane-methylhydrogensiloxane copolymer capped at both ends of the molecular chain with trimethylsiloxy groups; degree of polymerization, 27; SiH group content, 0.0069 mol/g), such that the SiH group/vinyl group ratio = 1.8 mol/mol; 0.01 part of benzotriazole (D1); 0.02 part of tritolyl phosphate (E1); and 0.10 part of ethynylcyclohexanol as a reaction regulator. Stirring was continued for 15 minutes, thereby giving a silicone rubber compound (the viscosity at 25°C, as measured with a BS viscometer using a number 7 rotor at 10 rpm, was 620 Pa·s).

A uniform silicone rubber composition was prepared by adding 0.25 part of (F1) a toluene solution of a complex of platinum with 1,3-divinyl-1,1,3,3-tetramethyldisiloxane (platinum atom basis, 1 wt%) to this silicone rubber compound. The composition was then press-cured (primary vulcanization) at 120°C for 10 minutes, and subsequently post-cured (secondary vulcanization) in an oven at 200°C for 4 hours, thereby giving a cured product. The results obtained by visually checking the appearance (color tone and transparency) of the cured product, the results obtained by measuring the hardness, tensile strength, elongation at break and tear strength (crescent) in accordance with JIS-K6249, and the results obtained by carrying out a flammability test based on the UL 94 standard are all shown in Table 1.

### [Working Example 2]

Sixty parts of dimethylpolysiloxane (A1) capped at both ends of the molecular chain with dimethylvinylsiloxy groups and having an average degree of polymerization of 750, 40 parts of fumed silica (C1) having a BET specific surface area of 300 m²/g (Aerosil 300, from Nippon Aerosil Co., Ltd.), 8 parts of hexamethyldisilazane and 2.0 parts of water were mixed together at room temperature for 30 minutes, after which the temperature was raised to 150°C and stirring was continued for 3 hours, then the mixture was cooled, giving a silicone rubber base.

The following were added to 100 parts of this silicone rubber base: 40 parts of the above dimethylpolysiloxane (A1); 5 parts of dimethylpolysiloxane (A2) which is capped at both ends of the molecular chain with trimethylsiloxy groups, in which 2.5 mol% of pendant methyl groups are vinyl groups and which has an average degree of polymerization of 200; as crosslinking agents, 1.09 parts of a methylhydrogenpolysiloxane (B2) which is capped at both ends of the molecular chain with trimethylsiloxy groups and has pendant SiH groups (a dimethylsiloxane-methylhydrogensiloxane copolymer capped at both ends of the molecular chain with trimethylsiloxy groups; degree of polymerization, 80; SiH group content, 0.0055 mol/g) and 2.06 parts of a methylhydrogenpolysiloxane (B3) which is capped at both ends of the molecular chain with dimethylhydrogensiloxy groups and has pendant SiH groups (a dimethylsiloxane-methylhydrogensiloxane copolymer which is capped at both ends of the molecular chain with dimethylhydrogensiloxy groups; degree of polymerization, 15; SiH group content, 0.0053 mol/g), such that the SiH group/vinyl group ratio = 2.5 mol/mol; 0.01 part of benzotriazole (D1); 0.01 part of triphenyl phosphate (E2); and 0.10 part of ethynylcyclohexanol as a reaction regulator. Stirring was continued for 15 minutes, thereby giving a silicone rubber compound (the viscosity at 25°C, as measured with a BS viscometer using a number 7 rotor at 10 rpm, was 590 Pa·s).

A uniform silicone rubber composition was prepared by adding 0.25 part of (F2) a 2-ethylhexanol solution of chloroplatinic acid (platinum atom basis, 1 wt%) to this silicone rubber compound. The composition was then press-cured (primary vulcanization) at 120°C for 10 minutes, and subsequently post-cured (secondary vulcanization) in an oven at 200°C for 4 hours, thereby giving a cured product. The results obtained by visually checking the appearance (color tone and transparency) of the cured product, the results obtained by measuring the hardness, tensile strength, elongation at break and tear strength (crescent) in accordance with JIS-K6249, and the results obtained by carrying out a flammability test based on the UL 94 standard are all shown in Table 1.

### [Working Example 3]

Sixty parts of dimethylpolysiloxane (A1) capped at both ends of the molecular chain with dimethylvinylsiloxy groups and having an average degree of polymerization of 750, 40 parts of fumed silica (C1) having a BET specific surface area of 300 m²/g (Aerosil 300, from Nippon Aerosil Co., Ltd.), 8 parts of hexamethyldisilazane and 2.0 parts of water were mixed together at room temperature for 30 minutes, after which the temperature was raised to 150°C and stirring was continued for 3 hours, then the mixture was cooled, giving a silicone rubber base.

The following were added to 100 parts of this silicone rubber base: 40 parts of the above dimethylpolysiloxane (A1); 5 parts of dimethylpolysiloxane (A2) which is capped at both ends of the molecular chain with trimethylsiloxy groups, in which 2.5 mol% of pendant methyl groups are vinyl groups and which has an average degree of polymerization of 200; as a crosslinking agent, 1.79 parts of a methylhydrogenpolysiloxane (B1) which is capped at both ends of the molecular chain with trimethylsiloxy groups and has pendant SiH groups (a dimethylsiloxane-methylhydrogensiloxane copolymer capped at both ends of the molecular chain with trimethylsiloxy groups; degree of polymerization, 27; SiH group content, 0.0069 mol/g), such that the SiH group/vinyl group ratio = 1.8 mol/mol; 0.02 part of benzotriazole (D1); 0.04 part of triethyl phosphate (E3); and 0.10 part of ethynylcyclohexanol as a reaction regulator. Stirring was continued for 15 minutes, thereby giving a silicone rubber compound (the viscosity at 25°C, as measured with a BS viscometer using a number 7 rotor at 10 rpm, was 610 Pa·s).

A uniform silicone rubber composition was prepared by adding 0.25 part of (F1) a toluene solution of a complex of platinum with 1,3-divinyl-1,1,3,3-tetramethyldisiloxane (platinum atom basis, 1 wt%) to this silicone rubber compound. The composition was then press-cured (primary vulcanization) at 120°C for 10 minutes, and subsequently post-cured (secondary vulcanization) in an oven at 200°C for 4 hours, thereby giving a cured product. The results obtained by visually checking the appearance (color tone and transparency) of the cured product, the results obtained by measuring the hardness, tensile strength, elongation at break and tear strength (crescent) in accordance with JIS-K6249, and the results obtained by carrying out a flammability test based on the UL 94 standard are all shown in Table 1.

### [Comparative Example 1]

Sixty parts of dimethylpolysiloxane (A1) capped at both ends of the molecular chain with dimethylvinylsiloxy groups and having an average degree of polymerization of 750, 40 parts of fumed silica (C1) having a BET specific surface area of 300 m²/g (Aerosil 300, from Nippon Aerosil Co., Ltd.), 8 parts of hexamethyldisilazane and 2.0 parts of water were mixed together at room temperature for 30 minutes, after which the temperature was raised to 150°C and stirring was continued for 3 hours, then the mixture was cooled, giving a silicone rubber base.

The following were added to 100 parts of this silicone rubber base: 40 parts of the above dimethylpolysiloxane (A1); 5 parts of dimethylpolysiloxane (A2) which is capped at both ends of the molecular chain with trimethylsiloxy groups, in which 2.5 mol% of pendant methyl groups are vinyl groups and which has an average degree of polymerization of 200; as a crosslinking agent, 1.79 parts of a methylhydrogenpolysiloxane (B1) which is capped at both ends of the molecular chain with trimethylsiloxy groups and has pendant SiH groups (a dimethylsiloxane-methylhydrogensiloxane copolymer capped at both ends of the molecular chain with trimethylsiloxy groups; degree of polymerization, 27; SiH group content, 0.0069 mol/g), such that the SiH group/vinyl group ratio = 1.8 mol/mol; and 0.10 part of ethynylcyclohexanol as a reaction regulator. Stirring was continued for 15 minutes, thereby giving a silicone rubber compound (the viscosity at 25°C, as measured with a BS viscometer using a number 7 rotor at 10 rpm, was 620 Pa·s).

A uniform silicone rubber composition was prepared by adding 0.25 part of (F1) a toluene solution of a complex of platinum with 1,3-divinyl-1,1,3,3-tetramethyldisiloxane (platinum atom basis, 1 wt%) to this silicone rubber compound. The composition was then press-cured (primary vulcanization) at 120°C for 10 minutes, and subsequently post-cured (secondary vulcanization) in an oven at 200°C for 4 hours, thereby giving a cured product. The results obtained by visually checking the appearance (color tone and transparency) of the cured product, the results obtained by measuring the hardness, tensile strength, elongation at break and tear strength (crescent) in accordance with JIS-K6249, and the results obtained by carrying out a flammability test based on the UL 94 standard are all shown in Table 1.

### [Comparative Example 2]

Sixty parts of dimethylpolysiloxane (A1) capped at both ends of the molecular chain with dimethylvinylsiloxy groups and having an average degree of polymerization of 750, 40 parts of fumed silica (C1) having a BET specific surface area of 300 m²/g (Aerosil 300, from Nippon Aerosil Co., Ltd.), 8 parts of hexamethyldisilazane and 2.0 parts of water were mixed together at room temperature for 30 minutes, after which the temperature was raised to 150°C and stirring was continued for 3 hours, then the mixture was cooled, giving a silicone rubber base.

The following were added to 100 parts of this silicone rubber base: 40 parts of the above dimethylpolysiloxane (A1); 5 parts of dimethylpolysiloxane (A2) which is capped at both ends of the molecular chain with trimethylsiloxy groups, in which 2.5 mol% of pendant methyl groups are vinyl groups and which has an average degree of polymerization of 200; as a crosslinking agent, 1.79 parts of a methylhydrogenpolysiloxane (B1) which is capped at both ends of the molecular chain with trimethylsiloxy groups and has pendant SiH groups (a dimethylsiloxane-methylhydrogensiloxane copolymer capped at both ends of the molecular chain with trimethylsiloxy groups; degree of polymerization, 27; SiH group content, 0.0069 mol/g), such that the SiH group/vinyl group ratio = 1.8 mol/mol; 0.01 part of benzotriazole (D1); and 0.10 part of ethynylcyclohexanol as a reaction regulator. Stirring was continued for 15 minutes, thereby giving a silicone rubber compound (the viscosity at 25°C, as measured with a BS viscometer using a number 7 rotor at 10 rpm, was 620 Pa·s).

A uniform silicone rubber composition was prepared by adding 0.25 part of (F1) a toluene solution of a complex of platinum with 1,3-divinyl-1,1,3,3-tetramethyldisiloxane (platinum atom basis, 1 wt%) to this silicone rubber compound. The composition was then press-cured (primary vulcanization) at 120°C for 10 minutes, and subsequently post-cured (secondary vulcanization) in an oven at 200°C for 4 hours, thereby giving a cured product. The results obtained by visually checking the appearance (color tone and transparency) of the cured product, the results obtained by measuring the hardness, tensile strength, elongation at break and tear strength (crescent) in accordance with JIS-K6249, and the results obtained by carrying out a flammability test based on the UL 94 standard are all shown in Table 1.

### [Comparative Example 3]

Sixty parts of dimethylpolysiloxane (A1) capped at both ends of the molecular chain with dimethylvinylsiloxy groups and having an average degree of polymerization of 750, 40 parts of fumed silica (C1) having a BET specific surface area of 300 m²/g (Aerosil 300, from Nippon Aerosil Co., Ltd.), 8 parts of hexamethyldisilazane and 2.0 parts of water were mixed together at room temperature for 30 minutes, after which the temperature was raised to 150°C and stirring was continued for 3 hours, then the mixture was cooled, giving a silicone rubber base.

The following were added to 100 parts of this silicone rubber base: 40 parts of the above dimethylpolysiloxane (A1); 5 parts of dimethylpolysiloxane (A2) which is capped at both ends of the molecular chain with trimethylsiloxy groups, in which 2.5 mol% of pendant methyl groups are vinyl groups and which has an average degree of polymerization of 200; as a crosslinking agent, 1.79 parts of a methylhydrogenpolysiloxane (B1) which is capped at both ends of the molecular chain with trimethylsiloxy groups and has pendant SiH groups (a dimethylsiloxane-methylhydrogensiloxane copolymer capped at both ends of the molecular chain with trimethylsiloxy groups; degree of polymerization, 27; SiH group content, 0.0069 mol/g), such that the SiH group/vinyl group ratio = 1.8 mol/mol; 0.02 part of tritolyl phosphate (E1); and 0.10 part of ethynylcyclohexanol as a reaction regulator. Stirring was continued for 15 minutes, thereby giving a silicone rubber compound (the viscosity at 25°C, as measured with a BS viscometer using a number 7 rotor at 10 rpm, was 620 Pa·s).

A uniform silicone rubber composition was prepared by adding 0.25 part of (F1) a toluene solution of a complex of platinum with 1,3-divinyl-1,1,3,3-tetramethyldisiloxane (platinum atom basis, 1 wt%) to this silicone rubber compound. The composition was then press-cured (primary vulcanization) at 120°C for 10 minutes, and subsequently post-cured (secondary vulcanization) in an oven at 200°C for 4 hours, thereby giving a cured product. The results obtained by visually checking the appearance (color tone and transparency) of the cured product, the results obtained by measuring the hardness, tensile strength, elongation at break and tear strength (crescent) in accordance with JIS-K6249, and the results obtained by carrying out a flammability test based on the UL 94 standard are all shown in Table 1.

### [Comparative Example 4]

Sixty parts of dimethylpolysiloxane (A1) capped at both ends of the molecular chain with dimethylvinylsiloxy groups and having an average degree of polymerization of 750, 40 parts of fumed silica (C1) having a BET specific surface area of 300 m²/g (Aerosil 300, from Nippon Aerosil Co., Ltd.), 8 parts of hexamethyldisilazane and 2.0 parts of water were mixed together at room temperature for 30 minutes, after which the temperature was raised to 150°C and stirring was continued for 3 hours, then the mixture was cooled, giving a silicone rubber base.

The following were added to 100 parts of this silicone rubber base: 40 parts of the above dimethylpolysiloxane (A1); 5 parts of dimethylpolysiloxane (A2) which is capped at both ends of the molecular chain with trimethylsiloxy groups, in which 2.5 mol% of pendant methyl groups are vinyl groups and which has an average degree of polymerization of 200; as a crosslinking agent, 1.79 parts of a methylhydrogenpolysiloxane (B1) which is capped at both ends of the molecular chain with trimethylsiloxy groups and has pendant SiH groups (a dimethylsiloxane-methylhydrogensiloxane copolymer capped at both ends of the molecular chain with trimethylsiloxy groups; degree of polymerization, 27; SiH group content, 0.0069 mol/g), such that the SiH group/vinyl group ratio = 1.8 mol/mol; 0.02 part of benzotriazole (D1); and 0.10 part of ethynylcyclohexanol as a reaction regulator. Stirring was continued for 15 minutes, thereby giving a silicone rubber compound (the viscosity at 25°C, as measured with a BS viscometer using a number 7 rotor at 10 rpm, was 600 Pa·s).

A uniform silicone rubber composition was prepared by adding 0.25 part of (F1) a toluene solution of a complex of platinum with 1,3-divinyl-1,1,3,3-tetramethyldisiloxane (platinum atom basis, 1 wt%) to this silicone rubber compound. The composition was then press-cured (primary vulcanization) at 120°C for 10 minutes, and subsequently post-cured (secondary vulcanization) in an oven at 200°C for 4 hours, thereby giving a cured product. The results obtained by visually checking the appearance (color tone and transparency) of the cured product, the results obtained by measuring the hardness, tensile strength, elongation at break and tear strength (crescent) in accordance with JIS-K6249, and the results obtained by carrying out a flammability test based on the UL 94 standard are all shown in Table 1.

### [Comparative Example 5]

Sixty parts of dimethylpolysiloxane (A1) capped at both ends of the molecular chain with dimethylvinylsiloxy groups and having an average degree of polymerization of 750, 40 parts of fumed silica (C1) having a BET specific surface area of 300 m²/g (Aerosil 300, from Nippon Aerosil Co., Ltd.), 8 parts of hexamethyldisilazane and 2.0 parts of water were mixed together at room temperature for 30 minutes, after which the temperature was raised to 150°C and stirring was continued for 3 hours, then the mixture was cooled, giving a silicone rubber base.

The following were added to 100 parts of this silicone rubber base: 40 parts of the above dimethylpolysiloxane (A1); 5 parts of dimethylpolysiloxane (A2) which is capped at both ends of the molecular chain with trimethylsiloxy groups, in which 2.5 mol% of pendant methyl groups are vinyl groups and which has an average degree of polymerization of 200; as a crosslinking agent, 1.79 parts of a methylhydrogenpolysiloxane (B1) which is capped at both ends of the molecular chain with trimethylsiloxy groups and has pendant SiH groups (a dimethylsiloxane-methylhydrogensiloxane copolymer capped at both ends of the molecular chain with trimethylsiloxy groups; degree of polymerization, 27; SiH group content, 0.0069 mol/g), such that the SiH group/vinyl group ratio = 1.8 mol/mol; 0.5 part of tritolyl phosphate (E1); and 0.10 part of ethynylcyclohexanol as a reaction regulator. Stirring was continued for 15 minutes, thereby giving a silicone rubber compound (the viscosity at 25°C, as measured with a BS viscometer using a number 7 rotor at 10 rpm, was 610 Pa·s).

A uniform silicone rubber composition was prepared by adding 0.25 part of (F1) a toluene solution of a complex of platinum with 1,3-divinyl-1,1,3,3-tetramethyldisiloxane (platinum atom basis, 1 wt%) to this silicone rubber compound. The composition was then press-cured (primary vulcanization) at 120°C for 10 minutes, and subsequently post-cured (secondary vulcanization) in an oven at 200°C for 4 hours, thereby giving a cured product. The results obtained by visually checking the appearance (color tone and transparency) of the cured product, the results obtained by measuring the hardness, tensile strength, elongation at break and tear strength (crescent) in accordance with JIS-K6249, and the results obtained by carrying out a flammability test based on the UL 94 standard are all shown in Table 1.

### [Comparative Example 6]

Sixty parts of dimethylpolysiloxane (A1) capped at both ends of the molecular chain with dimethylvinylsiloxy groups and having an average degree of polymerization of 750, 40 parts of fumed silica (C1) having a BET specific surface area of 300 m²/g (Aerosil 300, from Nippon Aerosil Co., Ltd.), 8 parts of hexamethyldisilazane and 2.0 parts of water were mixed together at room temperature for 30 minutes, after which the temperature was raised to 150°C and stirring was continued for 3 hours, then the mixture was cooled, giving a silicone rubber base.

The following were added to 100 parts of this silicone rubber base: 40 parts of the above dimethylpolysiloxane (A1); 5 parts of dimethylpolysiloxane (A2) which is capped at both ends of the molecular chain with trimethylsiloxy groups, in which 2.5 mol% of pendant methyl groups are vinyl groups and which has an average degree of polymerization of 200; as a crosslinking agent, 1.79 parts of a methylhydrogenpolysiloxane (B1) which is capped at both ends of the molecular chain with trimethylsiloxy groups and has pendant SiH groups (a dimethylsiloxane-methylhydrogensiloxane copolymer capped at both ends of the molecular chain with trimethylsiloxy groups; degree of polymerization, 27; SiH group content, 0.0069 mol/g), such that the SiH group/vinyl group ratio = 1.8 mol/mol; 0.01 part of benzotriazole (D1); instead of component (E), 3 parts of aluminum hydroxide (Higilite H320I-L, from Showa Denko K.K.) as a flame retardant; and 0.10 part of ethynylcyclohexanol as a reaction regulator. Stirring was continued for 15 minutes, thereby giving a silicone rubber compound (the viscosity at 25°C, as measured with a BS viscometer using a number 7 rotor at 10 rpm, was 640 Pa·s).

A uniform silicone rubber composition was prepared by adding 0.25 part of (F1) a toluene solution of a complex of platinum with 1,3-divinyl-1,1,3,3-tetramethyldisiloxane (platinum atom basis, 1 wt%) to this silicone rubber compound. The composition was then press-cured (primary vulcanization) at 120°C for 10 minutes, and subsequently post-cured (secondary vulcanization) in an oven at 200°C for 4 hours, thereby giving a cured product. The results obtained by visually checking the appearance (color tone and transparency) of the cured product, the results obtained by measuring the hardness, tensile strength, elongation at break and tear strength (crescent) in accordance with JIS-K6249, and the results obtained by carrying out a flammability test based on the UL 94 standard are all shown in Table 1.

### [Comparative Example 7]

Sixty parts of dimethylpolysiloxane (A1) capped at both ends of the molecular chain with dimethylvinylsiloxy groups and having an average degree of polymerization of 750, 40 parts of fumed silica (C1) having a BET specific surface area of 300 m²/g (Aerosil 300, from Nippon Aerosil Co., Ltd.), 8 parts of hexamethyldisilazane and 2.0 parts of water were mixed together at room temperature for 30 minutes, after which the temperature was raised to 150°C and stirring was continued for 3 hours, then the mixture was cooled, giving a silicone rubber base.

The following were added to 100 parts of this silicone rubber base: 40 parts of the above dimethylpolysiloxane (A1); 5 parts of dimethylpolysiloxane (A2) which is capped at both ends of the molecular chain with trimethylsiloxy groups, in which 2.5 mol% of pendant methyl groups are vinyl groups and which has an average degree of polymerization of 200; as a crosslinking agent, 1.79 parts of a methylhydrogenpolysiloxane (B1) which is capped at both ends of the molecular chain with trimethylsiloxy groups and has pendant SiH groups (a dimethylsiloxane-methylhydrogensiloxane copolymer capped at both ends of the molecular chain with trimethylsiloxy groups; degree of polymerization, 27; SiH group content, 0.0069 mol/g), such that the SiH group/vinyl group ratio = 1.8 mol/mol; instead of component (D), 3 parts of aluminum hydroxide (Higilite H320I-L, from Showa Denko K.K.) as a flame retardant; 0.02 part of tritolyl phosphate (E1); and 0.10 part of ethynylcyclohexanol as a reaction regulator. Stirring was continued for 15 minutes, thereby giving a silicone rubber compound (the viscosity at 25°C, as measured with a BS viscometer using a number 7 rotor at 10 rpm, was 680 Pa·s).

A uniform silicone rubber composition was prepared by adding 0.25 part of (F1) a toluene solution of a complex of platinum with 1,3-divinyl-1,1,3,3-tetramethyldisiloxane (platinum atom basis, 1 wt%) to this silicone rubber compound. The composition was then press-cured (primary vulcanization) at 120°C for 10 minutes, and subsequently post-cured (secondary vulcanization) in an oven at 200°C for 4 hours, thereby giving a cured product. The results obtained by visually checking the appearance (color tone and transparency) of the cured product, the results obtained by measuring the hardness, tensile strength, elongation at break and tear strength (crescent) in accordance with JIS-K6249, and the results obtained by carrying out a flammability test based on the UL 94 standard are all shown in Table 1.

**[Table 1]**

| | Working Example | | | Comparative Example | | | | | | |
|---|---|---|---|---|---|---|---|---|---|---|
| | 1 | 2 | 3 | 1 | 2 | 3 | 4 | 5 | 6 | 7 |
| Appearance (color tone) | colorless | colorless | colorless | colorless | colorless | colorless | colorless | colorless | white | white |
| Appearance (transparency) | translucent | translucent | translucent | translucent | translucent | translucent | translucent | translucent | opaque | opaque |
| Hardness (Durometer A) | 42 | 41 | 41 | 42 | 41 | 44 | 40 | 43 | 44 | 46 |
| Tensile strength (MPa) | 11 | 10.6 | 11.5 | 10.7 | 10.9 | 10.6 | 10.8 | 10.4 | 10.1 | 9.2 |
| Elongation at break (%) | 750 | 810 | 840 | 780 | 820 | 720 | 860 | 770 | 690 | 640 |
| Tear strength, crescent (kN/m) | 33 | 38 | 35 | 36 | 34 | 33 | 36 | 35 | 37 | 37 |
| UL 94 flammability | V-I | V-I | V-I | burned completely | burned completely | burned completely | burned completely | burned completely | burned completely | burned completely |

## Claims

1. An addition-curable silicone rubber composition comprising:
(A) 100 parts by weight of an alkenyl group-containing organopolysiloxane having at least two silicon-bonded alkenyl groups per molecule;
(B) from 0.2 to 20 parts by weight, per 100 parts by weight of component (A), of an organohydrogenpolysiloxane containing at least two silicon-bonded hydrogen atoms per molecule;
(C) from 5 to 80 parts by weight, per 100 parts by weight of components (A) and (B) combined, of a fine reinforcing silica powder having a specific surface area as measured by the BET method of at least 50 m²/g;
(D) from 0.001 to 1 part by weight of a triazole compound;
(E) from 0.001 to 5 parts by weight of a phosphate ester compound; and
(F) a catalytic amount of a platinum catalyst.

2. The addition-curable silicone rubber composition of claim 1, wherein component (D) is benzotriazole.

3. The addition-curable silicone rubber composition of claim 1 or 2, wherein component (E) is a triaryl phosphate.

4. The addition-curable silicone rubber composition of any one of claims 1 to 3 which gives a cured silicone rubber product having a flame retardancy of V-2 or better according to the UL 94 standard.

## Patentansprüche

1. Additionshärtbare Silikonkautschuk-Zusammensetzung, die Folgendes umfasst:
(A) 100 Gewichtsteile eines Alkenylgruppen enthaltenden Organopolysiloxans mit zumindest zwei Silicium-gebundenen Alkenylgruppen pro Molekül;
(B) 0,2 bis 20 Gewichtsteile pro 100 Gewichtsteile von Komponente (A) eines Organohydrogenpolysiloxans, das zumindest zwei Silicium-gebundene Wasserstoffatome pro Molekül enthält;
(C) 5 bis 80 Gewichtsteile pro 100 Gewichtsteile der Komponenten (A) und (B) zusammen eines feinen Kieselsäure-Verstärkungspulvers mit einer durch das BET-Verfahren gemessenen spezifischen Oberfläche von zumindest 50 m²/g;
(D) 0,001 bis 1 Gewichtsteil(e) einer Triazolverbindung;
(E) 0,001 bis 5 Gewichtsteile einer Phosphatesterverbindung; und
(F) eine katalytische Menge eines Platinkatalysators.

2. Additionshärtbare Silikonkautschuk-Zusammensetzung nach Anspruch 1, wobei Komponente (D) Benzotriazol ist.

3. Additionshärtbare Silikonkautschuk-Zusammensetzung nach Anspruch 1 oder 2, wobei Komponente (E) ein Triarylphosphat ist.

4. Additionshärtbare Silikonkautschuk-Zusammensetzung nach einem der Ansprüche 1 bis 3, die ein gehärtetes Silikonkautschukprodukt ergibt, das eine Flammhemmung gemäß dem UL-94-Standard von V-2 oder besser aufweist.

## Revendications

1. Composition de caoutchouc siliconé durcissable par addition comprenant :
(A) 100 parties en poids d'un organopolysiloxane contenant un groupe alcényle, ayant au moins deux groupes alcényle liés au silicium par molécule ;
(B) 0,2 à 20 parties en poids, pour 100 parties en poids du composant (A), d'un organohydrogénopolysiloxane contenant au moins deux atomes d'hydrogène liés au silicium par molécule ;
(C) 5 à 80 parties en poids, pour 100 parties en poids des composants (A) et (B) combinés, d'une poudre fine de silice de renforcement ayant une surface spécifique, telle que mesurée par la méthode BET, d'au moins 50 m²/g ;
(D) 0,001 à 1 partie en poids d'un composé triazole ;
(E) 0,001 à 5 parties en poids d'un composé ester phosphate ; et
(F) une quantité catalytique d'un catalyseur au platine.

2. Composition de caoutchouc siliconé durcissable par addition selon la revendication 1, dans laquelle le composant (D) est le benzotriazole.

3. Composition de caoutchouc siliconé durcissable par addition selon la revendication 1 ou 2, dans laquelle le composant (E) est un phosphate de triaryle.

4. Composition de caoutchouc siliconé durcissable par addition selon l'une quelconque des revendications 1 à 3, qui donne un produit en caoutchouc siliconé durci ayant une ininflammabilité de V-2 ou mieux conformément à la norme UL 94.
